(19) Europäisches Patentamt
European Patent Office
Office européen des brevets

(11) **EP 1 967 970 A1**

(12) **EUROPÄISCHE PATENTANMELDUNG**

(43) Veröffentlichungstag:
**10.09.2008 Patentblatt 2008/37**

(51) Int Cl.:
*G06F 17/30* *(2006.01)*

(21) Anmeldenummer: **08100719.7**

(22) Anmeldetag: **22.01.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **05.03.2007 DE 102007010504**

(71) Anmelder: **ROBERT BOSCH GMBH**
**70442 Stuttgart (DE)**

(72) Erfinder:
• **Schloegl, Dietmar**
**31079 Sibbesse (DE)**
• **Kersken, Ulrich**
**31199 Diekholzen (DE)**
• **Wettstein, Horst**
**76227 Karlsruhe (DE)**

(54) **Verfahren zum Segmentieren von Selektorbäumen zur intermittierenden Such- und Zielparametereingabe und Vorrichtung zur Durchführung des Verfahrens**

(57) Die Erfindung schafft ein Verfahren zum Segmentieren von in Selektorbäumen (100, 100a, 100b) angeordneten Dateneinheiten (102) in Datenuntereinheiten (202), wobei eine Eingabemaskeneinheit (101) bereitgestellt wird und die Dateneinheiten (201) in die Eingabemaskeneinheit (101) eingegeben werden. Ferner werden Datenuntereinheiten (202) aus den Dateneinheiten (201) gebildet, die Datenuntereinheiten (202) werden in eine erste Datenfolge (401) und in eine zweite Datenfolge (402) aufgeteilt. Schließlich werden mindestens eine Korrespondenzrelation (407) zwischen der ersten Datenfolge (401) und der zweiten Datenfolge (402) und mindestens eine Rückverweisung (404, 405) für die erste Datenfolge (401) und die zweite Datenfolge (402) bestimmt, so dass Redundanzen aus der ersten Datenfolge (401) und der zweiten Datenfolge (402) eliminiert werden können.

FIG. 1

EP 1 967 970 A1

# EP 1 967 970 A1

## Beschreibung

Die vorliegende Erfindung betrifft allgemein Fahrerinformations-, Multimediasysteme, Fahrzeugnavigationssysteme oder mobile Navigationssysteme, bei welchen eine intermittierende Such- bzw. Zielbestimmung in Form eines abwechselnden zeichenweisen Eingebens von Parametern durchgeführt wird. Spezifisch betrifft die vorliegende Erfindung ein Verfahren zum Segmentieren von in Selektorbäumen angeordneten Dateneinheiten in Datenuntereinheiten. Ferner betrifft die vorliegende Erfindung eine Steuerungseinrichtung zur Steuerung einer Eingabe der Ziel- und Suchparameter.

In Informationssystemen oder Datenbanken - im speziellen in Fahrerinformationssystemen liegen immer mehr Inhalte oder Begriffe vor, die über Eingaberoutinen der Benutzer-Maschinen-Schnittstelle ausgewählt werden können. Diese Inhalte sind durch Parameter beschrieben und können aus der Gesamtheit der Begriffe durch die Eingabe der Parameter eindeutig identifiziert werden. Beispiele für diese Inhalte sind:

- Audiodateien (bei Musikstücken: Interpret, Titel, Komponist, Musikart,...),
- Videodateien,
- Datensätze (Zielspeicher, Adressen, ...),
- Points of Interest,
- Reiseführerinformationen (Campingplätze, Museen, Hotels, Restaurants, historische Gebäude oder Begebenheiten,....),
- Kunstwerke (Künstler, Name des Kunstwerkes, Jahr der Fertigstellung, Epoche, Kunstgattung,...),
- Office (emails, Dateien,...),
- Einkaufsführer (Schnäppchenführer, Factory-Outlets,...)
- Gelbe Seiten/Branchenbuch.

## Stand der Technik

Aus dem PC-Bereich und der Consumer-Elektronik sind Suchverfahren bekannt, die verschiedene Parameter mit einander kombinieren und so die Auswahlmenge einschränken, wie beispielsweise Google-Suche im Internet mit mehreren Parametern, die auch unvollständig sein können.

Typischerweise ist hierbei keine schrittweise Ergänzung der Parameter möglich, bei der eine automatische Auswertung bzw. Anzeige der Auswahlmenge je Parameter erfolgt. Weiterhin erfolgt in nachteiliger Weise keine automatische Einschränkung nach jedem Eingabeschritt. Die Eingabe eines Parameters muss abgeschlossen sein, bevor mit der Eingabe des nächsten Parameters fort gefahren werden kann. Z.B muss bei einem Navigationsziel erst die Stadt eindeutig (Eindeutigkeit = Auswahlmenge enthält nur noch einen Eintrag/Kandidaten) sein, bevor mit dem Straßennamen begonnen werden kann. Oder bei einem Musikstück muss er Interpret erst eindeutig sein, bevor mit dem Titel des Musikstücks fortgefahren werden kann. Nach einer abgeschlossenen Eingabe eines Parameters hat der Nutzer in manchen Fällen die Wahl zwischen mehreren Parametern, um die Begriffsdefinition fortzuführen. Hat sich aber für einen entschieden und die Eingabe begonnen, dann muss er diese bis zu Eindeutigkeit fortführen.

Bei einer intermittierenden Zielbestimmung z.B. im Rahmen einer von Fahrzeugnavigationssystemen durchgeführten Navigationsprozedur wird während eines abwechselnden zeichenweisen Eingebens der Zielnamen laufend zwischen entsprechenden Teilnamen derart abgestimmt, dass sich einerseits die Namen gegenseitig einschränken, so dass weniger Eingabeschritte notwendig sind, und dass die Namen andererseits verträglich bleiben, was bedeutet, dass der letztlich angezeigte Ort eine angezeigte Straße auch tatsächlich enthält.

Beispielsweise weist in Deutschland bei ca. 300.000 unterschiedlichen Straßen eine mittlere Straßenanzahl pro Stadt einen Wert von ungefähr 75 auf. Die Datenmengen, die bei ca. $10^6$ existierenden Straßen auftreten, können in nachteiliger Weise sehr groß, d.h. > 4 MB sein. Die in der Regel größere Anzahl existierender Straßen bestimmt eine derartige Größe der Datenmenge. Die Kardialität von Relationen zwischen den Entitäten in einem Entitäts-Relationship-Diagramm (ER-Diagramm) ist von der Größenordnung $O(|O|*|S|)$. Hierbei bezeichnet der Buchstabe "O" Orte, während der Buchstabe "S" Straßen kennzeichnet.

Die Kardinalität beschreibt in der Datenbanktechnik die Komplexität oder den Grad einer Beziehung (Relationship) zwischen zwei Entitäten (Entities) in einem Entity-Relationship-Diagramm (ER-Diagramm). Hierbei wird die Kardinalität an der die Beziehung beschreibenden Raute oder - bei fehlender Raute - an der Verbindungslinie, die zwischen den beiden beteiligten Entitätstypen besteht, notiert. Die Kardinalität eines Beziehungstyps (Relationshiptyps) bestimmt, mit wie viel anderen Entitäten eine Entität eines bestimmten Entitätstyps in einer konkreten Beziehung stehen muss bzw. kann. Eine derartige Angabe erfolgt in einem ER-Diagramm durch eine Zahl bzw. einen Buchstaben oder eine Buchstabenkombination an der die Beziehung repräsentierenden Raute oder gelegentlich nur bestehenden Verbindungslinie zwischen den die Entitätstypen repräsentieren Rechtecken.

Bei der Eingabe von Ziel- und Suchparametern ist es sinnvoll, dass bei jedem Eingabezustand zur Fortsetzung nur diejenigen Zeichen bzw. Alphabetzeichen angeboten werden, die die bereits bestehenden Teilnamen zu sinnvollen Paaren erweitern. Derartige Namenseingaben weisen somit eine ständige gegenseitige Wechselwirkung auf. Die Erweiterung eines Namens schränkt im Allgemeinen die Fortsetzungsmöglichkeit auch eines anderen Namens ein.

Vorteile der Erfindung

Die der Erfindung zugrundeliegende Problematik besteht daher darin, derartig große Dateneinheiten in Datenuntereinheiten in Abhängigkeit von einer Segmentierung von Selektorbäumen und Rückverweisungen zu segmentieren.

Die der Erfindung zugrunde liegende Problematik wird durch ein Verfahren zum Segmentieren von in Selektorbäumen angeordneten Dateneinheiten in Datenuntereinheiten mit den in dem Patentanspruch 1 angegebenen Schritten behandelt. Ferner wird eine Steuerungseinrichtung zur Steuerung einer Eingabe von Ziel- und Suchparametern mit den Merkmalen des Patentanspruchs 12 bereitgestellt.

Weitere Ausgestaltungen der Erfindung ergeben sich aus den Unteransprüchen.

Es sei darauf hingewiesen, dass sich der in der nachfolgenden Beschreibung verwendete Begriff "Ziel- und Suchparameter" nicht nur auf geographische Ziele bei Navigationssystemen, sondern auf beliebige geographische Ziele und andere Ziele wie beispielsweise Ziele bei der Eingabe von Musikstücken, bei der Suche von Buchtiteln etc. beziehen kann.

Ein wesentlicher Gedanke der Erfindung besteht darin, eine Segmentierung hinsichtlich einer Steuerung der Ziel- und Suchparametereingabe und hinsichtlich einer notwendigen Vorbereitung sämtlicher beteiligten Dateneinheiten bereitzustellen. In zweckmäßiger Weise wird eine benötigte Relation zwischen zwei Datenfolgen (Ortsdatenmenge bzw. Straßendatenmenge) dadurch realisiert, dass in einer ersten Datenfolge, die einem Indexteil entsprechen kann, sämtliche Ortsnamen alphabetisch aufgelistet sind, während in einer zweiten Datenfolge, die einem Zeigerteil entsprechen kann, zugeordnete Straßennamen vorhanden sind, auf die von den Ortsnamen verwiesen wird. In vorteilhafter Weise wird eine Intervall definiert, das eine Teilmenge der Orts- Straßen-paare derart festlegt, dass der eine der beiden Partner Element der Teilmenge ist. Wird dies mit beiden Teilnamen bzw. Bäumen durchgeführt, dann ergibt sich eine Namenseinschränkung bei beiden Partnern. In vorteilhafter Weise ist eine Kardinalität dieser Schnittmenge üblicherweise kleiner als die Kardinalitäten der parameterspezifischen Teilmenge, so dass eine Einschränkung bewirkt wird.

Gemäß einem allgemeinen Aspekt weist das erfindungsgemäße Verfahren zum Segmentieren von in Selektorbäumen angeordneten Dateneinheiten in Datenuntereinheiten die folgenden Schritte auf:

a) Bilden von Datenuntereinheiten aus den Dateneinheiten;

b) Aufteilen der Datenuntereinheiten in eine erste Datenfolge und eine zweite Datenfolge;

c) Bestimmen mindestens einer Korrespondenzrelation zwischen der ersten Datenfolge und der zweiten Datenfolge;

d) Bestimmen mindestens einer Rückverweisung für die erste Datenfolge und die zweite Datenfolge; und

e) Eliminieren von Redundanzen aus der ersten Datenfolge und der zweiten Datenfolge.

Ferner weist die erfindungsgemäße Steuerungseinrichtung zur Steuerung einer Eingabe von Ziel- und Suchparametern im Wesentlichen auf:

a) eine Eingabemaskeneinheit zur Eingabe der Ziel- und Suchparametern;

b) einen ersten Selektorbaum, der aus einer ersten Wurzelsegmenteinheit und aus ersten Blattsegmenteinheiten aufgebaut ist, mit einer ersten Datenfolge;

c) mindestens einen zweiten Selektorbaum, der aus einer zweiten Wurzelsegmenteinheit und aus zweiten Blattsegmenteinheiten aufgebaut ist, mit einer zweiten Datenfolge; und

d) eine Index-Zeigereinheit zur Bereitstellung einer Korrespondenzrelation zwischen der ersten Datenfolge und der zweiten Datenfolge, wobei

e) ein Segmenttupel eines Selektorbaums zusammen mit der Korrespondenzrelation zwischen der ersten Datenfolge und der zweiten Datenfolge und mit Rückverweisungen von der Index-Zeigereinheit in einem Arbeitsspeicher der Steuerungseinrichtung bereitgestellt ist.

Gemäß einem weiteren Aspekt weist das erfindungsgemäße Verfahren zur intermittierenden Such- und Zielparametereingabe mit segmentierten Selektorbäumen von angeordneten Dateneinheiten in Datenuntereinheiten ferner die folgenden Schritte auf:

a) Bereitstellen von aus den Dateneinheiten gebildeten Datenuntereinheiten;

b) Bereitstellen der Datenuntereinheiten aus einer ersten Datenfolge und einer zweiten Datenfolge;

c) Einsetzen mindestens einer Korrespondenzrelation zwischen der ersten Datenfolge und der zweiten Datenfolge zum Auffinden einer Korrespondenz zwischen den Datenfolgen;

d) Bereitstellen mindestens einer Rückverweisung für die erste Datenfolge und die zweite Datenfolge; und

e) wechselseitiges Einschränken von Such- und Zielparametern entsprechend der Korrespondenzen und Rückverweisungen aus der ersten Datenfolge und der zweiten Datenfolge.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung werden die Selektorbäume durch eine Trennungseinheit in Wurzelsegmenteinheiten und Blattsegmenteinheiten zerlegt. Hierbei können die Selektorbäume in vorteilhafter Weise in einen oberen Teil Wurzelsegmenteinheiten und in einem unteren Teil mehrere nachfolgende nebeneinander angeordnete Blattsegmenteinheiten aufweisen.

Gemäß noch einer weiteren bevorzugten Weiterbildung der vorliegenden Erfindung weist die Trennungseinheit, durch welche die Selektorbäume in Wurzelsegmenteinheiten und in Blattsegmenteinheiten zerlegt werden, dann einen mäanderförmigen Verlauf auf, wenn die Segmenteinheiten gleich mächtig auszulegen sind, wie beispielsweise vergleichbare Größe in Byte oder vergleichbare Anzahl an Namen, etc aufweisen.

Die Trennungseinheit , durch welche die Selektorbäume in Wurzelsegmenteinheiten und in Blattsegmenteinheiten zerlegt werden, weist beispielsweise dann einen mäanderförmigen Verlauf auf, wenn aus speichertechnischen Gründen eine gleiche Mächtigkeit der Segmente zu gewährleisten ist.

Gemäß noch einer weiteren bevorzugten Weiterbildung der vorliegenden Erfindung werden die Segmenteinheiten, die aus Wurzelsegmenteinheiten und Blattsegmenteinheiten bestehen, auf der Grundlage von Datenintervallen gebildet.

Gemäß noch einer weiteren bevorzugten Weiterbildung der vorliegenden Erfindung stellen die Wurzelsegmenteinheiten zweier Zieldatenmengen eine wechselseitige Einschränkung von Datenpräfixen bereit.

Gemäß noch einer weiteren bevorzugten Weiterbildung der vorliegenden Erfindung bildet eine Wurzelsegmenteinheit mit einer zugehörigen Blattsegmenteinheit einen zusammenhängenden, dichten Adressraum.

Gemäß noch einer weiteren bevorzugten Weiterbildung der vorliegenden Erfindung wird durch eine Wurzelsegmenteinheit eines ersten Selektorbaums einer ersten Datenfolge eine wechselseitige Einschränkung mit mindestens einer Blattsegmenteinheit eines zweiten Selektorbaums einer zweiten Datenfolge bereitgestellt. Hierbei ist es vorteilhaft, dass die Wurzelsegmenteinheit des Selektorbaums der ersten Namensmenge eine wechselseitige Einschränkung mit einer beliebigen Blattsegmenteinheit des Selektorbaums der zweiten Namensmenge ermöglicht.

Gemäß noch einer weiteren bevorzugten Weiterbildung der vorliegenden Erfindung wird mindestens eine Korrespondenzrelation zwischen der ersten Datenfolge und der zweiten Datenfolge gebildet, derart, dass Einschränkungen von Datenpräfixen ermöglicht werden. Es ist vorteilhaft, dass sicher Namenseinschränkungen von beliebig abwechselnd eingegebenen Namenspräfixen bereitgestellt werden.

Gemäß noch einer weiteren bevorzugten Weiterbildung der vorliegenden Erfindung der vorliegenden Erfindung wird die zur Einschränkung von Datenpräfixen bereitgestellte Korrespondenzrelation zwischen der ersten Datenfolge und der zweiten Datenfolge auf Intervall bezogene Korrespondenzrelationen transformiert. Hierdurch ergibt sich der Vorteil, dass Namenseinschränkungen von beliebig abwechselnd eingegebenen Namens- oder Intervallpräfixen bereitgestellt werden.

Gemäß noch einer weiteren bevorzugten Weiterbildung der vorliegenden Erfindung weist die Steuerungseinrichtung eine Mischeinheit zur Mischung von elementbezogenen und intervallbezogenen Abstimmungen auf. Somit ist es zweckmäßig, dass elementbezogene und intervallbezogene Abstimmungen in beliebigen Mischungen ermöglicht werden.

Gemäß noch einer weiteren bevorzugten Weiterbildung der vorliegenden Erfindung weist die Steuerungseinrichtung ferner eine Erfassungseinheit zur Erfassung von Übergängen zwischen Segmentkombinationen und zur Bereitstellung von Teilen einer folgenden Segmentkombination auf. In vorteilhafter Weise ermöglicht es die Eingabesteuerung, einen Übergang von einer Segmentkombination auf eine nächste zu erkennen und situationsbedingt notwendige Teile für eine nächste Segmentkombination bereitzustellen.

Gemäß noch einer weiteren bevorzugten Weiterbildung der vorliegenden Erfindung ist eine in der Steuereinrichtung angeordnete Zuordnungseinheit zur Einschränkung zwischen einer Wurzelsegmenteinheit und einer zugeordneten Blattsegmenteinheit bereitgestellt. Vorzugsweise wird zwischen der Wurzelsegmenteinheit und der Blattsegmenteinheit eine fließende Einschränkung ermöglicht.

Gemäß noch einer weiteren bevorzugten Weiterbildung der vorliegenden Erfindung weist die Steuerungseinrichtung ferner eine Adressierungseinheit zum Übergang zwischen einer relativen Elementadressierung und einer absoluten Elementadressierung bei einer wechselseitigen Abstimmung auf. Hierbei ist es vorteilhaft, dass der bei der wechselseitigen Abstimmung notwendige Übergang von Relativ- auf Absolutelementadressierung und umgekehrt auf effiziente Weise ermöglicht wird.

Gemäß noch einer weiteren bevorzugten Weiterbildung der vorliegenden Erfindung weist die Steuerungseinrichtung ferner eine Wiederherstellungseinheit zur benutzergesteuerten Umsetzung von vorhandenen Segmentkombinationen auf. Hierdurch ergibt sich der Vorteil, dass die Eingabesteuerung dazu herangezogen werden kann, um bei einem benutzergewünschten Rücksetzen der Eingabesteuerung gegebenenfalls ein vorausgegangene Segmentkombination wieder herzustellen. Eine derartige Weiterbildung bezieht sich wiederum Anwendungen der vorliegenden Erfindung in der Navigation.

Gemäß noch einer weiteren bevorzugten Weiterbildung der vorliegenden Erfindung werden in einer EE-Relation enthaltene Elementnummern durch ihre jeweiligen umfassenden Intervallnummern ersetzt, wobei dabei entstehende Redundanzen der Such- und Zielparameter in einem Indexteil und/oder in einem Zeigerteil eliminiert werden.

Zeichnungen

Ausführungsbeispiele der Erfindung sind in den Zeichnungen dargestellt und in der nachfolgenden Beschreibung näher erläutert. In den Zeichnungen zeigen:

Fig. 1 schematisch eine Blockbild des erfindungsgemäßen Verfahrens zum Segmentieren von in Selektorbäumen angeordneten Dateneinheiten und zum Bestimmen einer Korrespondenzrelation und zur wechselseitigen Einschränkung bei paarweiser Zieleingabe;

Fig. 2(a) eine erfindungsgemäße Auslegung der Index-Zeigereinheit in einer ortsdichten Anordnung;

Fig. 2(b) die erfindungsgemäße Index-Zeigereinheit in einer straßendichten Anordnung;

Fig. 3 ein Blockbild der erfindungsgemäßen Steuerungseinrichtung zur Steuerung einer Eingabe von Ziel- und Suchparametern schematisch;

Fig. 4 eine Übersichtsdarstellung eines segmentierten Selektorbaums mit einer Wurzelsegmenteinheit und zugeordneten Blattsegmenteinheiten;

Fig. 5(a) ein Ablaufdiagramm zur Ermittlung von segmentrelevanten Intervallen in einem Selektorbaum;

Fig. 5(b) die zu dem in Fig. 5(a) dargestellten Intervalle in tabellarischer Form;

Fig. 6 Intervalle im Orts- und Straßenraum, wobei Selektorbäume nicht dargestellt sind;

Fig. 7(a), (b) und (c) die Erzeugung einer II-Relation, wobei Fig. 7(a) eine ER-Relation veranschaulicht, Fig. 7(b) den Indexteil und den Zeigerteil nach Ersetzungen durch Zeigeradressen bzw. Intervallnummern zeigt, und Fig. 7(c) den Indexteil und den Zeigerteil nach Eliminierung von Redundanzen und nach einem Aufrücken in beiden Teilen, d.h. eine II-Relation veranschaulicht;

Fig. 8(a), (b) und (c) die Erzeugung einer EIR-Relation, wobei Fig. 8(a) eine EER-Relation veranschaulicht, Fig. 8(b) den Indexteil und den Zeigerteil einer Index-Zeigereinheit nach Ersetzungen durch Intervallnummern im Zeigerteil verdeutlicht, und Fig. 8(c) den in den Fig.8 (a) und 8 (b) gezeigten Indexteil und Zeigerteil nach einem Eliminieren von Redundanzen und nach einem Aufrücken im Zeigerteil, d.h. eine EIR-Relation, veranschaulicht;

Fig. 9(a), (b) und (c) die Erzeugung einer IEL-Relation, wobei Fig. 9(a) eine EEL-Relation veranschaulicht, Fig. 9(b) den Zeigerteil und den Indexteil einer Index-Zeigereinheit nach Ersetzungen durch Intervall-

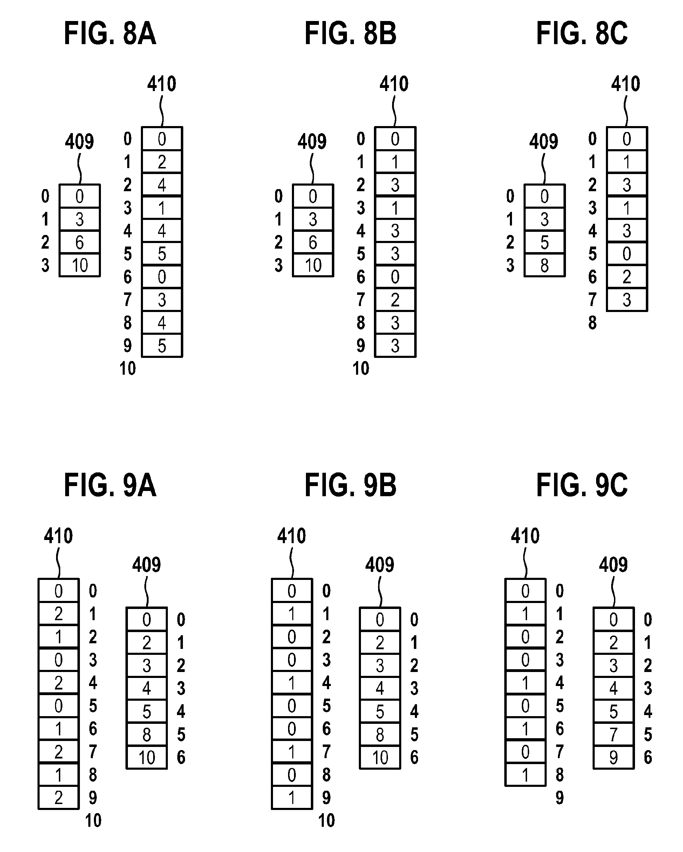

nummern in Zeigerteile veranschaulicht und Fig. 9(c) den in Fig. 9(b) veranschaulichten Zeigerteil und Indexteil nach einem Eliminieren von Redundanzen und nach einem Aufrücken im Zeigerteil, d.h. eine IEL-Relation, veranschaulicht;

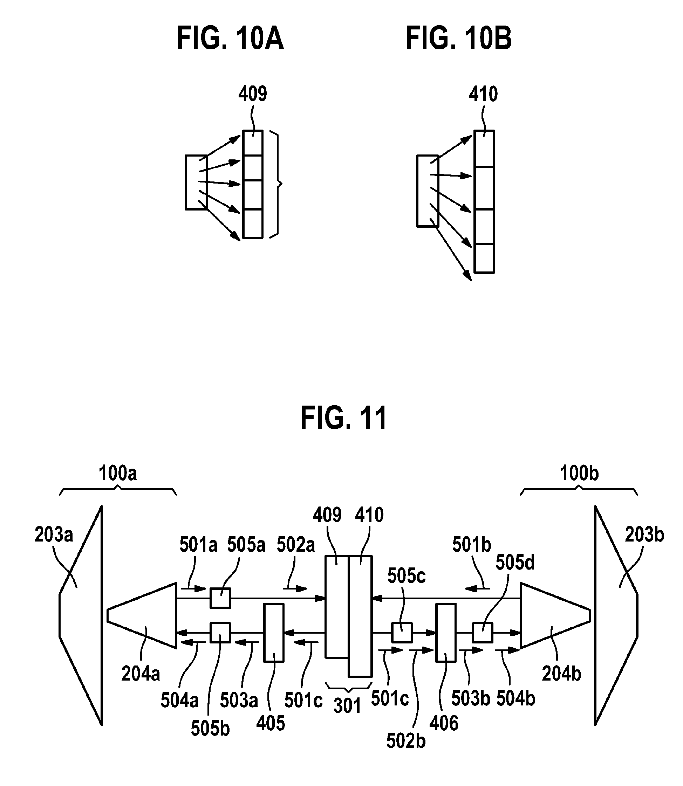

Fig. 10(a) Komponenten einer segmentierten Korrespondenzrelation mit einem Indexteil;

Fig. 10(b) Komponenten einer segmentierten Korrespondenzrelation mit einem Zeigerteil; und

Fig. 11 ein Ablaufdiagramm zur Veranschaulichung eines Verfahrens bei Umrechnungen in der Anwendung einer EE-Relation.

**[0034]** In den Figuren bezeichnen gleiche Bezugszeichen gleiche oder funktionsgleiche Komponenten oder Schritte.

Beschreibung der Ausführungsbeispiele

**[0035]** Im Folgenden werden bevorzugte Ausführungsbeispiele der vorliegenden Erfindung anhand der Zeichnungen beschrieben werden.

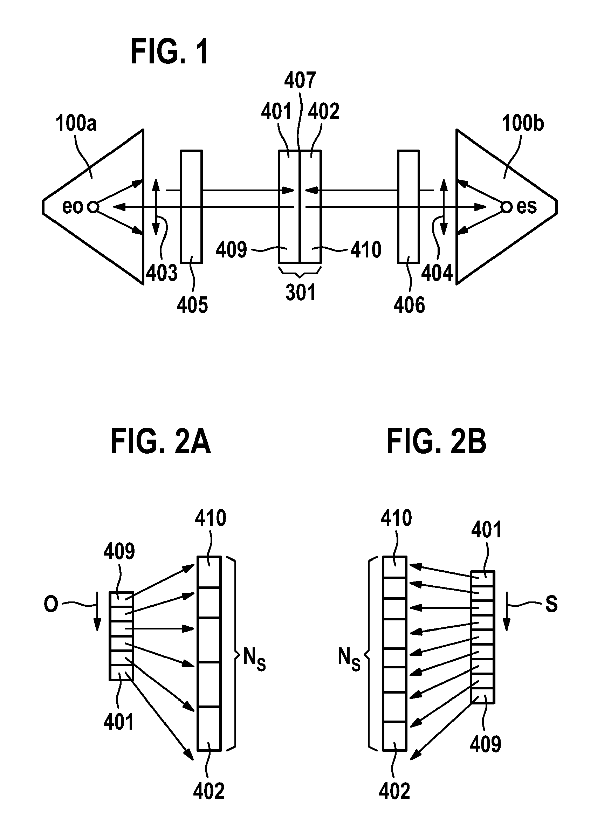

**[0036]** Fig. 1 zeigt einen Ablaufplan bei der Erzeugung einer wechselseitigen Einschränkung in der paarweisen Zieleingabe. Hierbei bezeichnet ein Bezugszeichen 100a einen Selektorbaum für Orte, während ein Bezugszeichen 100b einen Selektorbaum für Straßen bezeichnet. Bei einem abwechselnden zeichenweisen Eingeben von Zielnamen wird zwischen den Teilnamen derart abgestimmt, dass einerseits die Namen gegenseitig einschränken, so dass weniger Eingaben erforderlich sind, und dass die Namen andererseits verträglich bleiben, d.h. dass der letztlich angezeigte Ort die angezeigte Straße auch tatsächlich enthält. Die Grundlage einer derartigen Abstimmung ist das Vorhandensein einer bipartiten Korrespondenzrelation, die aus gültigen Orts-Straßen-Paaren besteht. Ferner muss die Möglichkeit vorhanden sein, bei einem vorliegenden Teilnamen festzustellen, welche Gesamtnamen im Rahmen einer gegebenen Namensmenge daraus entstehen können.

**[0037]** Zu diesem Zweck werden die in Fig. 1 gezeigten Selektorbäume 100a, 100b eingesetzt, die auch als Präfixbäume bezeichnet werden. Diese sind strukturell lexikografisch geordnet, so dass sich von jedem inneren Zeichen aus der Seitenrand des von ihm aufgespannten Unterbaums bis hin zu Blattelementeinheiten ablaufen lässt. Die dort zugeordneten Namen bestimmen das noch mögliche Namensintervall aus einer geordneten Namensmenge. Dieses Intervall ist für Ortsnamen durch ein Bezugszeichen 403 angezeigt, während das Intervall für Straßennamen durch ein Bezugszeichen 404 gekennzeichnet ist. Die Intervalle 403, 404 definieren wiederum eine Teilmenge von Orts-Straßen-Paaren, derart, dass einer der beiden Partner Element der Teilmenge ist. Geschieht dies mit beiden Teilnamen bzw. Selektorbäumen 100a, 100b, dann liegt von beiden Partnern eine Namenseinschränkung vor. Insgesamt sind dann nur noch diejenigen Orts-Straßen-Paare möglich, die in der Schnittmenge dieser beiden Paarteilmengen liegen. Da die Kardinalität dieser Schnittmenge in der Regel kleiner als die Kardinalitäten der parameterspezifischen Teilmengen ist, ergibt sich eine weitere Einschränkung. Die Gesamteinschränkung wird über erste und zweite Rückverweisungen 405 bzw. 406 auf die Selektorbäume 100a bzw. 100b übertragen und steuert dort die nächste Vorgabe noch möglicher Zeichen. Der Vorgang bewirkt die gegenseitige Wechselwirkung und realisiert damit in zweckmäßiger Weise eine intermittierende Eingabe. In vorteilhafter Weise ergeben sich kürzerer Zwangseingaben und eine bessere Verträglichkeit des Ergebnisses. Eine derartige Abstimmung muss vor jedem Eingabevorgang stattfinden. Derartige Orts-Straßen-Relationen bestehen aus einer Menge P der Paare

$$\langle o,s \rangle \in O \times S \qquad (1)$$

wobei o den Namen eines Ortes (Menge 0) und s den Namen einer Straße (Menge S) bezeichnen.

**[0038]** Eine derartige Relation ist symmetrisch, d.h. das Paar kann auch in umgekehrter Reihenfolge angegeben werden. Eine derartige Relation wird in zweckmäßiger Weise dadurch realisiert, dass in einer ersten Folge sämtliche Ortsnamen alphabetisch aufgelistet sind und dass von jedem dieser Namen auf einen Abschnitt von zugeordneten Straßennamen in einer zweiten Folge verwiesen wird. Die erste Folge bzw. Datenfolge entspricht in dem in Fig. 1 gezeigten Ablaufplan dem Indexteil 409, während die zweite Folge (zweite Datenfolge) 402 dem Zeigerteil 410 entspricht. Wegen einer totalen Ordnung beider Namensmengen können diese zur Vereinfachung einer Handhabung durch ganzzahlige Nummern ersetzt werden. Im Indexteil 409 können alphabetische Namen vollständig entfallen, da dort ohnehin nur eine Auswahl der jeweils zugeordneten anderen Menge vorliegt. Im Übrigen ist es möglich, dass die Nummern im Zeigerteil 410 lediglich auf die alphanumerischen Elementnamen oder auf Repräsentanten der Elemente verweisen.

**[0039]** Die Fig. 2(a) und 2(b) zeigen die beiden Alternativen, die sich somit ergeben. Fig. 2(a) zeigt eine ortsdichte,

rechtlaufende Orts-Straßen-Korrespondenzrelation, während Fig. 2(b) eine straßendichte, linkslaufende Orts-Straßen-Korrespondenzrelation veranschaulicht. In Fig. 2(a) ist die erste Datenfolge 401 im Indexteil 409 angeordnet, wobei der Teil O die Anordnung der Orte wiedergibt. In dem Zeigerteil 410 befindet sich die zweite Datenfolge 402, in welcher Straßenabschnitte abgelegt sind. Die Länge des in Fig. 2(a) dargestellten Zeigerteils 410 entspricht der Anzahl vorkommender Straßen $N_S$. Die Kardinalität der Relationen ist von der Größenordnung

$$O(|O|*|S|) \hspace{5cm} (2).$$

Ein Maximum wird dann erreicht, wenn jede Straße in jedem Ort vorkommt.

Fig. 2(b) zeigt eine zu Fig. 2(a) inverse Situation. Hier befinden sich im Zeigerteil 410 Ortsabschnitte, während im Indexteil 409 Straßen angegeben sind. Somit besteht die erste Datenfolge 401 aus Straßenabschnitten, während die zweite Datenfolge 402 aus Ortsabschnitten besteht. Während in Fig. 2(a) die Länge des Indexteils 409 durch die Anzahl unterschiedlicher Orte gegeben ist, ist in Fig. 2(b) die Länge des Indexteils 409 durch die Anzahl unterschiedlicher Straßen gegeben. Wie in Fig. 2(b) gezeigt, entspricht die Länge des Zeigerteils 410 ebenso wie in Fig. 2(a) einer Anzahl $N_S$ vorkommender Straßen.

Es sei darauf hingewiesen, dass die in Fig. 2(b) dargestellte Anordnung einer straßendichten Anordnung entspricht, die linkslaufend ist. Ein Maximum der Kardinalität wird dann erricht, wenn jede Straße in jedem Ort vorkommt, wie obenstehend beschrieben.

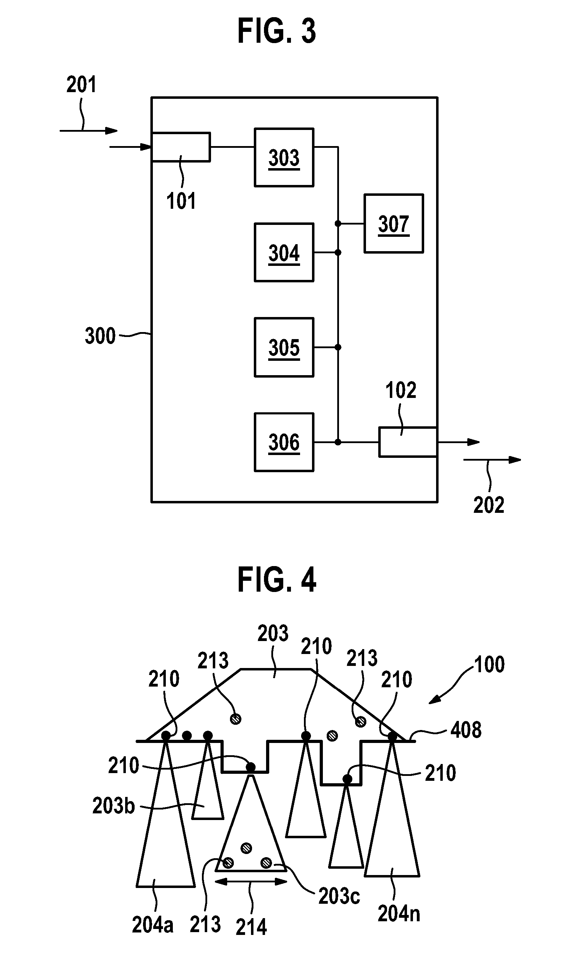

In Fig. 3 ist eine Steuerungseinrichtung 300 gemäß einem bevorzugten Ausführungsbeispiel der vorliegenden Erfindung als ein Prinzip-Blockbild veranschaulicht. Die Steuerungseinrichtung 300 weist eine Eingabemaskeneinheit 101 zum Eingeben von Dateneinheiten 201 in die Steuerungseinrichtung 300 und eine Ausgabeeinheit 102 zum Ausgeben von segmentierten Datenstrukturen auf. Die Eingabemaskeneinheit 101 ist mit einer Mischeinheit 303 verbunden, in welcher eine Mischung von elementbezogenen und intervallbezogenen Abstimmungen bereitgestellt wird (siehe auch Fig. 1).

Die Eingabemaskeneinheit 101 dient neben einer Eingabe der Such- und Zielparameter (409) auch als eine Spracherkennungs- und/oder Gestikerkennungseinheit.

Ferner ist in der Steuerungseinrichtung 300 eine Erfassungseinheit 304 zur Erfassung von Übergängen zwischen Segmentkombinationen und zur Bereitstellung von Teilen einer folgenden Segmentkombination vorhanden. Ein Bezugszeichen 305 bezeichnet eine in der Steuereinrichtung 300 angeordnete Zuordnungseinheit 305 zur Einschränkung zwischen einer Wurzelsegmenteinheit 203a, 203b (siehe untenstehend Fig. 11) und einer zugeordneten Blattsegmenteinheit 204a, 204b.

Ferner ist eine Adressierungseinheit 306 zum Übergang zwischen einer relativen und einer absoluten Elementadressierung bei einer wechselseitigen Abstimmung vorhanden, die untenstehend unter Bezugnahme auf Fig. 11 näher erläutert ist. Eine Wiederherstellungseinheit 307 dient einer benutzergesteuerten Rücksetzung von vorhandenen Segmentkombinationen.

Im Folgenden wird auf die Struktur einer Segmentierung gemäß dem erfindungsgemäßen Verfahren zum Segmentieren von in Selektorbäumen 100, 100a, 100b angeordneten Dateneinheiten 201 in Datenuntereinheiten 202, die aus der in Fig. 3 gezeigten Ausgabeeinheit 102 ausgegeben werden, beschrieben werden. Grundlage einer derartigen Segmentierung bilden Namensintervalle. Die entsprechenden Elemente sind total geordnet und diese Ordnung ist sowohl in Selektorbäumen 100a, 100b als auch in der Korrespondenzrelation 407 vorhanden. Auf diese Weise lassen sich beide Datenstrukturen entlang derartiger Intervalle aufteilen. Ein typischer Selektorbaum 100 ist schematisch in Fig. 4 veranschaulicht. Ein derartiger Selektorbaum 100 besteht aus einer Wurzelsegmenteinheit 203 und unterschiedlichen Blattsegmenteinheiten 204a-204n. Die in Fig. 4 dargestellte Gliederung wird als eine zweischichtige Gliederung bezeichnet. Es sei jedoch darauf hingewiesen, dass die vorliegende Erfindung nicht auf zwei Schichten beschränkt ist, sondern dass eine Gliederung in mehr als zwei Schichten möglich ist.

In der in Fig. 4 dargestellten zweischichtigen Gliederung ist der obere Teil ein wurzelnahes Segment, d.h. die Wurzelsegmenteinheit 203, während die unteren Teile blattnahe Segmente bzw. Blattsegmenteinheiten 204a-204n sind. Der Übergang, d.h. die Trennungseinheit 408 kann zur Erzielung ausgewogener Mengen in unterschiedlichen Abständen von der Spitze angelegt sein.

Es sei darauf hingewiesen, dass die Trennungseinheit 408, durch welche die Selektorbäume 100, 100a, 100b in Wurzelsegmenteinheiten 203 und in Blattsegmenteinheiten 204, 204, 204a, 204b zerlegt werden, einen mäanderformigen Verlauf aufweisen kann.

Die Blattsegmenteinheiten 204a-204n sind Unterbäume, die von Übergangselementen 210 an einem unteren Rand der Wurzelsegmenteinheit 203 ausgehen. Ein Übergangselement 210 stellt ein Elementintervall 214 dar, das sowohl für eine Namensmenge mit identischen Präfixen - repräsentiert durch den Zeichenpfad von der Spitze zu dem Übergangselement 210 - als auch für die Namensmenge steht, die in dem anhängenden Unterbaum vereinigt ist.

Weiterhin sind Terminalelemente 213 vorhanden, welche am Ende eines Pfades stehen, wenn keine weitere Verzweigung mehr erforderlich ist. Sie stellen somit ein einzelnes Namenselement dar und können in der Wurzelsegmenteinheit 203 angeordnet sein, insbesondere bei kurzen Namen oder Namen mit einem einzigartigen Präfix. Ferner können diese Terminalelemente 213 in Startsegmenten, wie beispielsweise dem Blattsegment 204c angeordnet sein. In den Blattsegmenteinheiten 204a-204n stellen sie gerade die Elemente dar, die das zugeordnete Elementintervall 214 bestimmen.

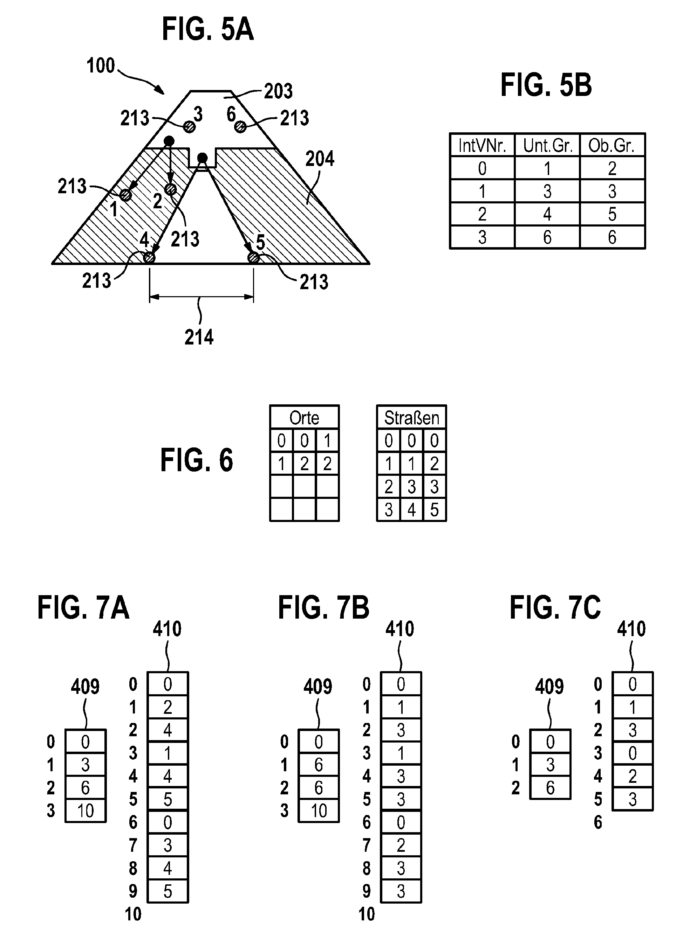

Fig. 5 zeigt einen Ablaufplan zum Ermitteln von segmentrelevanten Elementintervallen 214 in einem Selektorbaum 100. Hierbei veranschaulicht Fig. 5(a) einen entsprechenden Selektorbaum 100 mit durchnummerierten Terminalelementen 213 sowie zwei Übergangselementen 210. Der Selektorbaum 100 ist in eine Wurzelsegmenteinheit 203 und eine Blattsegmenteinheit 204 unterteilt.

Die Elementintervalle 214 |(siehe auch Fig. 4) können durch ein Ablaufen eines fertigen Selektorbaums 100 zusammengestellt werden. Primär wird die Wurzelsegmenteinheit 203 abgelaufen. Beim Erreichen eines Terminalelements 213 entsteht ein Elementintervall. Von einem Übergangselement 210 aus läuft man in dessen Unterbaum (Blattsegmenteinheit 204) die beiden äußersten Pfade bis zu einem jeweiligen Terminalelement 213. Die beiden dort erreichen Nummern bestimmen die Grenzen des Elementintervalls 214.

Fig. 5(b) zeigt eine Tabelle von Elementintervallen 214, die aus dem in der Fig. 5(a) dargestellten Beispiel entstanden sind. Die in der Tabelle der Fig. 5(b) aufgelisteten vier Intervalle laufen von 0 bis 3, wobei diese nullbasisindiziert sind. Somit entsteht eine Mischung aus Einelementintervallen und Mehrelementintervallen. Die Mehrelementintervalle dienen einer Identifizierung von Blattsegmenteinheiten 204a-204n. Die Intervallgrenzen bilden eine totale Ordnung, was die Elementordnung in dem Selektorbaum 100 selbst widerspiegelt.

Bei einer durch einen Selektorbaum 100 gesteuerten Eingabe wird in einem Pfad eines Selektorbaums 100 entlanggelaufen, wodurch es zweckmäßig ist, für eine intermittierende Eingabe mit den Wurzelsegmenteinheiten 203 des Orts- und Straßenselektorbaums 100a bzw. 100b zu beginnen. Die Segmenteinheiten weisen beispielsweise eine mittlere Pfadlänge von drei bis vier Zeichen auf. Bei selten vorkommenden Namen mit kurzem eindeutigen Präfix kann dadurch bereits ein Ergebnis erzielt werden. In den Wurzelsegmenteinheiten 203 werden dabei die dort vorhandenen Terminalelemente 213 erreicht. Für den Ablauf der Wechselwirkung muss eine Korrespondenzrelation 407 (siehe Fig. 1) eingesetzt werden, die gerade die Orts- und Straßenelementintervalle der Wurzelsegmente 203 in eine zweckmäßige Beziehung setzt. Dabei werden die Terminalelemente 213 in den Wurzelsegmenten 203 wie ein Elementintervall behandelt. Eine derartige Datenmenge wird als eine II-Relation (Intervall-Intervall-Relation) bezeichnet.

Wenn eine Eingabesteuerung bei einem der Selektorbäume 100a, 100b den Rand einer Wurzelsegmenteinheit 203 bei einem der Übergangselemente 210 erreicht, dann wird die nachfolgende Blattsegmenteinheit 204a-204n ergänzend zur Verfügung gestellt. Die nächsten zur Auswahl anzubietenden Zeichen stammen bereits aus der Blattsegmenteinheit 204a-204n. An dieser Stelle werden Wurzelsegmenteinheiten 203 und Blattsegmenteinheiten 204a-204n zusammen benötigt, um einen fließenden Übergang ohne Einwirkung auf den Steuerungsablauf sicherzustellen. Um dies zu erreichen, sind die Blattsegmenteinheiten 203a-203n relativ zur Lage ihrer Übergangselemente 210 adressiert. Beide Segmenteinheiten bilden einen zusammenhängenden Adressraum.

Die weitere Steuerung der Eingabe erfolgt in der Blattsegmenteinheit 204a-204n. Eine Abstimmung zu diesem Blattsegment 204a-204n erfolgt jetzt elementorientiert, d.h. je nachdem, mit welchem Ziel- und Suchparameter (Orts- oder Straßenname) dieser Wechsel zunächst vollzogen wird, muss eine Korrespondenzrelation 407 Verwendung finden, die Elemente mit Intervallen (EI-Relation) bzw. Intervallen mit Elementen (IE-Relation) in Beziehung bringt. Als Elementmengen müssen lediglich die Elemente aus den jeweiligen Blattsegmenteinheiten 204a-204n eingesetzt werden.

Auf diese Weise entsteht eine mit den Blattsegmenteinheiten 204a-204n korrespondierende Segmentierung der Korrespondenzrelationen 407. Da bei der IE-Relation aber nur die E-Seite (d.h. die Seite, auf der die Straßen angeordnet sind) segmentiert werden kann, ist für diese Relation eine straßendichte Variante erforderlich. Aus diesem Grund wird zwischen einer EIR-Relation (rechtslaufend) und einer IEL-Relation (linkslaufend) unterschieden. Wenn schließlich auch der nachlaufende Ziel- und Suchparameter die Trennungslinie bzw. die Trennungseinheit 48 in dem zugeordneten Selektorbaum 100a, 100b erreicht, dann wird eine beidseits segmentierte Relation benötigt, die wie im nicht-segmentierten Fall Elemente mit Elementen verbindet (EE-Relation). Auf diese Weise ist eine segmentierte Korrespondenzrelation 407 erforderlich, die in der Lage ist, beliebige Blattsegmenteinheiten 204a-204n aus beiden Namensmengen abzustimmen. Entsprechende Rückverweisungen 405 bzw. 406 (siehe Fig. 1) müssen in sämtlichen Fällen entsprechend gegliedert sein.

Liegen EIR- und EIL-Relationen vor, dann können aus der rechtslaufenden Variante die II- und die EIR-Relation sowie aus der linkslaufenden Variante IEL-Relation abgeleitet werden. Eine Kernidee besteht hierbei darin, die in der EE-Relation enthaltenen Elementnummern durch ihre umfassenden Intervallnummern zu ersetzen und die dabei entstehenden Redundanzen im Indexteil 409 und/oder im Zeigerteil 410 zu eliminieren.

Fig. 6 zeigt Elementintervalle im Orts-Selektorbaum 100a (links) bzw. im Straßen-Selektorbaum 100b (rechts). Die vollständigen Bäume sind jeweils nicht dargestellt. Die erste Spalte bezeichnet jeweils die Intervallnummer, während die zweiten und dritten Spalten die Intervallgrenzen angeben. Bei den Orten fallen die Nummern 0 und 1 zusammen. Dies ist im Indexteil 409 dadurch gekennzeichnet, dass ein nachfolgender Index 6, der als Anfang eines nächsten Abschnitts im Zeigerteil 410 auf das Ende des laufenden Abschnitts markiert, über wegfallende Einträge nach vorne gezogen wird. Dies ist eine Äquivalenzmaßnahme, da die Ortsnummern nicht explizit vorhanden sind. Gleiche Nummern in einer Folge weisen auch auf ein Zusammenfallen von Abschnitten im Zeigerteil 410 hin. Im Zeigerteil ist der Ersatz von Elementnummern durch Intervallnummern direkt. Es kann jedwede Nummer herangezogen werden, um festzustellen, welchem Straßenintervall sie angehört.

In Fig. 7 ist ein Beispiel mit drei Orten, Nummern 0 bis 2, und sechs Straßen, Nummern 0 bis 5, veranschaulicht. Bei den Orten fallen die Nummern 0 und 1 zusammen. Dies ist im Indexteil dadurch gekennzeichnet, dass man den nachfolgenden Index 6, der als Anfang des nächsten Abschnitts im Zeigerteil auf das Ende des laufenden Abschnitts markiert, über die wegfallenden Einträge nach vorne zieht. Hierbei handelt es sich um eine Äquivalenzmaßnahme, da die Ortsnummern nicht explizit vorhanden sind. Gleiche Nummern in einer Folge weisen auch auf ein Zusammenfallen von Abschnitten im Zeigerteil 410 hin. Im Zeigerteil 410 ist ein Satz von Elementnummern durch die Intervallnummern direkt. Man kann jedwede Nummer heranziehen und feststellen, welchem Straßenintervall sie angehört und sie durch dessen Nummer ersetzen.

Auf diese Weise wird aus der "2" eine "1", aus der "3" eine "2", aus der "4" eine "3" und aus der "5" ebenfalls eine "3". In dem in Fig. 7(b) dargestellten Bildteil ist der Zustand nach den genannten Ersetzungen gezeigt. Deutlich ist zu erkennen, dass auch im Zeigerteil 410 innerhalb der verbleibenden Abstände gleiche Nummern entstanden sind, welche über den Abschnitt verteilt sind. Um diese zusammenfassen zu können, müssen die Abschnitte sortiert und unter Weglassen von Wiederholungen verdichtet werden. Da sich sämtliche Abschnitte verdichten können, müssen sie gleichzeitig nach vorne aufgerückt werden. Dies erfolgt synchron zu einem Aufrücken in den Indexteil 409. Das Ergebnis ist in dem in Fig. 7(c) dargestellten Bildteil veranschaulicht. Die Relation hat den gleichen inneren strukturellen Aufbau wie vorher, ist aber insgesamt kürzer geworden.

Der in Fig. 7(c) dargestellte Bildteil entspricht, nach einer Eliminierung von Redundanzen und einem Aufrücken in beiden Teilen einer II-Relation.

Die Fig. 8(a), (b) und (c) zeigen die entsprechenden Verhältnisse bei der Erzeugung einer EIR-Relation. Prinzipiell ist der Ablauf zur Erzeugung der EIR-Relation der gleiche wie zur Erzeugung der II-Relation, die in Fig. 7(a)-(c) dargestellt ist. Lediglich im Zeigerteil 410 sind Veränderungen vorzunehmen. Da sich im Indexteil 409 nichts verändert, bleibt auch die Anzahl der Abschnitte im Zeigerteil 410 gleich. Lediglich innerhalb der Abschnitte können sich durch die Ersetzung mit Intervallnummern gleiche Werte ergeben. In den in Fig. 8 gezeigten Beispielen werden in Abschnitt 1 und 2 die Ziffern "4" und "5" zu einer "3", neben einer Ersetzung von "2" in "1" und "4" durch "3" im Abschnitt 0. Die Abschnitte 1 und 2 werden kürzer und rücken auf. Das Ergebnis ist in dem in Fig. 8(c) dargestellten Bildteil gezeigt.

Zur Erzeugung einer IEL-Relation wird eine linkslaufende Form benötigt. Wie in Fig. 9(a)-(c) dargestellt, wird zunächst von der EEL-Relation ausgegangen. In dem Indexteil 409 (rechte Spalte) sind Anfänge von sechs Straßenabschnitten im Zeigerteil 410 dargestellt, die die Nummern der den Straßen zugeordneten Orte enthalten. In diesem Teil werden mit den Ortsintervallen die Nummer "1" durch "0" und die Nummer "2" durch "1" ersetzt. Dabei ergibt sich im Abschnitt 4 eine Redundanz (zweimal eine "0"), die durch ein Eliminieren und Aufrücken beseitigt wird, wobei die beiden letzten Anfangsadressen im Indexteil 409 korrigiert werden. Das Resultat ist wiederum in dem in Fig. 9(c) gezeigten Bildteil in Form einer IEL-Relation zusammengefasst.

Die auf diese Weise erzeugten Relationen stellen die strukturelle Voraussetzung für den Betrieb mit segmentierten Selektorbäumen 100, 100a, 100b bereit. Als derartige Relationen zu große Datenmengen darstellen, die gegebenenfalls den verfügbaren Speicherplatz überschreiten, müssen auch die Relationen segmentiert werden. Für die II-Relation im Betrieb mit den Wurzelsegmenteinheiten ist dies dann nicht erforderlich, wenn die Wurzelsegmenteinheiten 203 in ihrer Größe begrenzt bleiben.

Bei den Blattsegmenteinheiten 204a-204n ist es zweckmäßig, dass eine zugehörige Relation korrespondierend zu den Elementintervallen 214 des Wurzelsegments 203 der Einstiegsseite gegliedert ist. Man kann daher für eine Blattsegmenteinheit 204a-204n lediglich den zugeordneten Abschnitt der zugehörigen Relation einlagern. Dies ist dort zutreffend, wo auf eine Blattsegmenteinheit 204a-204n ein "E" der Relationsbezeichnung trifft, beispielsweise bei einer Blattsegmenteinheit 204a-204n eines Ortsbaums der EE-Relation oder der EI-Relation. Liegt bei dem ersten Selektorbaum 100a, d.h. beim Orts-Selektorbaum 100a erste die Wurzelsegmenteinheit 203 und beim zweiten Selektorbaum 100b bereits eine Blattsegmenteinheit 204-204n vor, dann muss die linkslaufende IEL-Relation eingesetzt werden, die von der Straßenseite her segmentiert ist. Die Konsequenz ist, dass im Betrieb dann auch der Abstimmungseinstieg vom Straßenbaum ausgehen muss.

Der Betrieb mit einer Blattsegmenteinheit 204a-204n ist grundsätzlich identisch zu dem Betrieb eines vollständigen Selektorbaums 100a, 100b, lediglich ist der Elementumfang geringer. Deshalb muss eine Teilrelation wie die Gesamtrelation strukturiert sein. Dies bedeutet eine in sich geordnete Nullbasisindizierung der Elemente sowie ein Endelement im Indexteil. Aus diesem Grund müssen die Relationen nochmals umgeformt werden, derart, dass die Elemente segmentrelativ nummeriert sind und dass jeder Abschnitt im Indexteil um ein Endelement ergänzt wird. Die korrespondierenden Abschnitte im Indexteil 409 und im Zeigerteil 410 sind unterschiedlich lang. Bei dieser Umformung kann man zudem die in der II-Relation enthaltenen Einelementintervalle weglassen.

Eine Relation kann einige hundert derartiger segmentspezifischer Abschnitte enthalten. Sie sind in ihrer Gesamtheit auf einem Datenträger gespeichert. Bei der Ansteuerung einer Blattsegmenteinheit wird einer dieser Abschnitte benötigt. Damit dieser ausgewählt werden kann, werden beide Teile der Relation um je eine Einheit ergänzt, die die relativen Anfangsadressen der Abschnitte enthält. Die Einstichfolgen spielen gegenüber den Relationsteilen die gleiche Rolle wie der Indexteil 409 gegenüber dem Zeigerteil 410 der Relation selbst. Diese Situation ist in der nachfolgenden Fig. 10 veranschaulicht, wobei Fig. 10(a) eine erste Datenfolge mit einem Indexteil 409 veranschaulicht, während Fig. 10(b) eine zweite Datenfolge 402 mit dem Zeigerteil 410 darstellt.

Mit den dargestellten, vorbereiteten Segmenten bei einer Eingabesteuerung die wechselseitigen Einschränkungen durchgeführt. Der Zugriff auf die einzelnen Elemente in den Segmenten (Ortsnummern, Straßennummern, Ladeadressen, Relationen) erfolgt weitestgehend segmentrelativ.

Fig. 11 veranschaulicht einen Ablaufplan bei einem Segmentieren von in Selektorbäumen 100a, 100b angeordneten Dateneinheiten in Datenuntereinheiten, wobei im Vergleich zu Fig. 1 zusätzlich Umrechnungseinheiten 505a, 505b, 505c und 505d angegeben sind. Die Umrechnungseinheiten dienen einer Umrechung von relativen Lageadressen in absolute Lageadressen (Umrechnungseinheit 505b). Ferner ist eine Umrechnungseinheit 505a zur Umrechnung von absoluten Elementnummern 501a in relative Elementnummern 502a vorhanden. Eine Umrechnungseinheit 505c dient einer Umrechnung von absoluten Elementnummern in relative Elementnummern, während eine Umrechungseinheit 505f einer Umrechnung von relativen Lageadressen 503b in absolute Lageadressen 504b dient. Die übrigen Bezugszeichen bezeichnen gleiche oder ähnliche Komponenten wie unter Bezugnahme auf Fig. 1 beschrieben.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

## Patentansprüche

1. Verfahren zum Segmentieren von in Selektorbäumen (100, 100a, 100b) angeordneten Dateneinheiten (201) in Datenuntereinheiten (202), mit den folgenden Schritten:

   a) Bilden von Datenuntereinheiten (202) aus den Dateneinheiten (201);
   b) Aufteilen der Datenuntereinheiten (202) in eine erste Datenfolge (401) und eine zweite Datenfolge (402);
   c) Bestimmen mindestens einer Korrespondenzrelation (407) zwischen der ersten Datenfolge (401) und der zweiten Datenfolge (402);
   d) Bestimmen mindestens einer Rückverweisung (404, 405) für die erste Datenfolge (401) und die zweite Datenfolge (402); und
   e) Eliminieren von Redundanzen aus der ersten Datenfolge (401) und der zweiten Datenfolge (402).

2. Verfahren nach Anspruch 1,
   **dadurch gekennzeichnet,**
   **dass** eine Eingabemaskeneinheit (101) bereitgestellt wird, in welche die Dateneinheiten (201) eingegeben werden.

3. Verfahren nach Anspruch 1,
   **dadurch gekennzeichnet,**
   **dass** die Selektorbäume (100, 100a, 100b) durch eine Trennungseinheit (408) in Wurzelsegmenteinheiten (203) und in Blattsegmenteinheiten (204, 204, 204a, 204b) zerlegt werden.

4. Verfahren nach Anspruch 2,
   **dadurch gekennzeichnet,**
   **dass** die Trennungseinheit (408), durch welche die Selektorbäume (100, 100a, 100b) in Wurzelsegmenteinheiten (203) und in Blattsegmenteinheiten (204, 204, 204a, 204b) zerlegt werden, einen mäanderförmigen Verlauf aufweist.

5. Verfahren nach Anspruch 3,
   **dadurch gekennzeichnet,**
   **dass** die Segmenteinheiten (203, 204, 204a, 204b) auf der Grundlage von Datenintervallen (403, 404) gebildet werden.

6. Verfahren nach Anspruch 3,
   **dadurch gekennzeichnet,**
   **dass** die Wurzelsegmenteinheiten (203) zweier Zieldatenmengen eine wechselseitige Einschränkung von Datenpräfixen bereitstellen.

7. Verfahren nach einem der Ansprüche 3 bis 6,
**dadurch gekennzeichnet,**
**dass** eine Wurzelsegmenteinheit (203) mit einer zugehörigen Blattsegmenteinheit (204, 204, 204a, 204b) einen zusammenhängenden dichten Adressraum bildet.

8. Verfahren nach einem der Ansprüche 3 bis 7,
**dadurch gekennzeichnet,**
**dass** durch eine Wurzelsegmenteinheit (203) eines ersten Selektorbaums (100a) einer ersten Datenfolge (401) eine wechselseitige Einschränkung mit mindestens einer Blattsegmenteinheit (204, 204, 204a, 204b) eines zweiten Selektorbaums (100b) einer zweiten Datenfolge (402) bereitstellt wird.

9. Verfahren nach mindestens einem der voranstehenden Ansprüche,
**dadurch gekennzeichnet,**
**dass** mindestens eine Korrespondenzrelation (407) gebildet wird, derart, dass Einschränkungen von Datenpräfixen ermöglicht werden.

10. Verfahren nach Anspruch 9,
**dadurch gekennzeichnet,**
**dass** die zur Einschränkung von Datenpräfixen bereitgestellte Korrespondenzrelation (407) auf intervallbezogene Korrespondenzrelationen transformiert wird.

11. Verfahren nach Anspruch 9,
**dadurch gekennzeichnet,**
**dass** die zur Einschränkung von Datenpräfixen bereitgestellte Korrespondenzrelation (407) auf Segmenteinheiten (203, 204, 204a, 204b) eines zugeordneten Selektorbaums (100, 100a, 100b) transformiert wird.

12. Steuerungseinrichtung (300) zur Steuerung einer Eingabe von Such- und Zielparametern (409), mit:

a) einer Eingabemaskeneinheit (101) zur Eingabe der Ziel- und Suchparametern (409);
b) einem ersten Selektorbaum (100a), der aus einer ersten Wurzelsegmenteinheit (203a) und aus ersten Blattsegmenteinheiten (204a) aufgebaut ist, mit einer ersten Datenfolge (401);
c) mindestens einem zweiten Selektorbaum (100b), der aus einer zweiten Wurzelsegmenteinheit (203b) und aus zweiten Blattsegmenteinheiten (204b) aufgebaut ist, mit einer zweiten Datenfolge (402); und
d) einer Index-Zeigereinheit (301) zur Bereitstellung einer Korrespondenzrelation (407) zwischen der ersten Datenfolge (401) und der zweiten Datenfolge (402), wobei
e) ein Segmenttupel (302) eines Selektorbaums (100a, 100b) zusammen mit der Korrespondenzrelation (407) zwischen der ersten Datenfolge (401) und der zweiten Datenfolge (402) und mit Rückverweisungen (405, 406) von der Index-Zeigereinheit (301) in einem Arbeitsspeicher der Steuerungseinrichtung (300) bereitgestellt ist.

13. Steuerungseinrichtung (300) nach Anspruch 12,
**dadurch gekennzeichnet,**
**dass** eine Mischeinheit (303) zur Mischung von elementbezogenen und intervallbezogenen Abstimmungen bereitgestellt ist.

14. Steuerungseinrichtung (300) nach Anspruch 12,
**dadurch gekennzeichnet,**
**dass** die Steuerungseinrichtung (300) ferner eine Erfassungseinheit (304) zur Erfassung von Übergängen zwischen Segmentkombinationen und zur Bereitstellung von Teilen einer folgenden Segmentkombination aufweist.

15. Steuerungseinrichtung (300) nach Anspruch 12,
**dadurch gekennzeichnet,**
**dass** eine in der Steuereinrichtung (300) angeordnete Zuordnungseinheit (305) zur Einschränkung zwischen einer Wurzelsegmenteinheit (203a, 203b) und einer zugeordneten Blattsegmenteinheit (204a, 204b) bereitgestellt ist.

16. Steuerungseinrichtung (300) nach Anspruch 12,
**dadurch gekennzeichnet,**

**dass** die Steuerungseinrichtung (300) ferner eine Adressierungseinheit (306) zum Übergang zwischen einer relativen und einer absoluten Elementadressierung bei einer wechselseitigen Abstimmung aufweist.

17. Steuerungseinrichtung (300) nach Anspruch 12,
**dadurch gekennzeichnet,**
**dass** die Steuerungseinrichtung (300) ferner eine Wiederherstellungseinheit (307) zur benutzergesteuerten Rücksetzung von vorhandenen Segmentkombinationen aufweist.

18. Verfahren zur intermittierenden Such- und Zielparametereingabe mit segmentierten Selektorbäumen (100, 100a, 100b) von angeordneten Dateneinheiten (201) in Datenuntereinheiten (202), mit den Schritten:

a) Bereitstellen von aus den Dateneinheiten (201) gebildeten Datenuntereinheiten (202);
b) Bereitstellen der Datenuntereinheiten (202) aus einer ersten Datenfolge (401) und einer zweiten Datenfolge (402);
c) Einsetzen mindestens einer Korrespondenzrelation (407) zwischen der ersten Datenfolge (401) und der zweiten Datenfolge (402) zum Auffinden einer Korrespondenz zwischen den Datenfolgen (401, 402);
d) Bereitstellen mindestens einer Rückverweisung (404, 405) für die erste Datenfolge (401) und die zweite Datenfolge (402); und
e) wechselseitiges Einschränken von Such- und Zielparametern (409) entsprechend der Korrespondenzen und Rückverweisungen aus der ersten Datenfolge (401) und der zweiten Datenfolge (402).

19. Verfahren nach Anspruch 18,
**dadurch gekennzeichnet,**
**dass** in einer EE-Relation enthaltene Elementnummern durch ihre jeweiligen umfassenden Intervallnummern ersetzt werden, wobei dabei entstehende Redundanzen der Such- und Zielparameter (409) in einem Indexteil und/oder in einem Zeigerteil (410) eliminiert werden.

# FIG. 1

# FIG. 2A

# FIG. 2B

# FIG. 3

# FIG. 4

## FIG. 5A

## FIG. 5B

| IntVNr. | Unt.Gr. | Ob.Gr. |
|---------|---------|--------|
| 0 | 1 | 2 |
| 1 | 3 | 3 |
| 2 | 4 | 5 |
| 3 | 6 | 6 |

## FIG. 6

| Orte | | |
|---|---|---|
| 0 | 0 | 1 |
| 1 | 2 | 2 |
| | | |
| | | |

| Straßen | | |
|---|---|---|
| 0 | 0 | 0 |
| 1 | 1 | 2 |
| 2 | 3 | 3 |
| 3 | 4 | 5 |

## FIG. 7A

## FIG. 7B

## FIG. 7C

## FIG. 8A

409

| | |
|---|---|
| 0 | 0 |
| 1 | 3 |
| 2 | 6 |
| 3 | 10 |

410

| | |
|---|---|
| 0 | 0 |
| 1 | 2 |
| 2 | 4 |
| 3 | 1 |
| 4 | 4 |
| 5 | 5 |
| 6 | 0 |
| 7 | 3 |
| 8 | 4 |
| 9 | 5 |
| 10 | |

## FIG. 8B

409

| | |
|---|---|
| 0 | 0 |
| 1 | 3 |
| 2 | 6 |
| 3 | 10 |

410

| | |
|---|---|
| 0 | 0 |
| 1 | 1 |
| 2 | 3 |
| 3 | 1 |
| 4 | 3 |
| 5 | 3 |
| 6 | 0 |
| 7 | 2 |
| 8 | 3 |
| 9 | 3 |
| 10 | |

## FIG. 8C

409

| | |
|---|---|
| 0 | 0 |
| 1 | 3 |
| 2 | 5 |
| 3 | 8 |

410

| | |
|---|---|
| 0 | 0 |
| 1 | 1 |
| 2 | 3 |
| 3 | 1 |
| 4 | 3 |
| 5 | 0 |
| 6 | 2 |
| 7 | 3 |
| 8 | |

## FIG. 9A

410

| | |
|---|---|
| 0 | 0 |
| 2 | 1 |
| 1 | 2 |
| 0 | 3 |
| 2 | 4 |
| 0 | 5 |
| 1 | 6 |
| 2 | 7 |
| 1 | 8 |
| 2 | 9 |
| | 10 |

409

| | |
|---|---|
| 0 | 0 |
| 2 | 1 |
| 3 | 2 |
| 4 | 3 |
| 5 | 4 |
| 8 | 5 |
| 10 | 6 |

## FIG. 9B

410

| | |
|---|---|
| 0 | 0 |
| 1 | 1 |
| 0 | 2 |
| 0 | 3 |
| 1 | 4 |
| 0 | 5 |
| 0 | 6 |
| 1 | 7 |
| 0 | 8 |
| 1 | 9 |
| | 10 |

409

| | |
|---|---|
| 0 | 0 |
| 2 | 1 |
| 3 | 2 |
| 4 | 3 |
| 5 | 4 |
| 8 | 5 |
| 10 | 6 |

## FIG. 9C

410

| | |
|---|---|
| 0 | 0 |
| 1 | 1 |
| 0 | 2 |
| 0 | 3 |
| 1 | 4 |
| 0 | 5 |
| 1 | 6 |
| 0 | 7 |
| 1 | 8 |
| | 9 |

409

| | |
|---|---|
| 0 | 0 |
| 2 | 1 |
| 3 | 2 |
| 4 | 3 |
| 5 | 4 |
| 7 | 5 |
| 9 | 6 |

# FIG. 10A

409

# FIG. 10B

410

# FIG. 11

100a

203a

501a 505a 502a

409 410

505c

501b 505d 100b

203b

204a

504a 503a 501c

505b 405

301 501c

502b

406

503b 504b 204b

| | Europäisches Patentamt | **EUROPÄISCHER RECHERCHENBERICHT** | Nummer der Anmeldung EP 08 10 0719 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RAVADA S ET AL: "Optimizing join index based join processing: a graph partitioning approach" RELIABLE DISTRIBUTED SYSTEMS, 1998. PROCEEDINGS. SEVENTEENTH IEEE SYMP OSIUM ON WEST LAFAYETTE, IN, USA 20-23 OCT. 1998, LOS ALAMITOS, CA, USA,IEEE COMPUT. SOC, US, 20. Oktober 1998 (1998-10-20), Seiten 302-308, XP010319105 ISBN: 978-0-8186-9218-5 * Seite 302 - Seite 303 * ----- | 1-19 | INV. G06F17/30 |
| X | CHANG-TIEN LU ET AL: "Efficient join-index-based spatial-join processing: a clustering approach" IEEE TRANSACTIONS ON KNOWLEDGE AND DATA ENGINEERING, IEEE SERVICE CENTER, LOS ALAMITOS, CA, US, Bd. 14, Nr. 6, 1. November 2002 (2002-11-01), Seiten 1400-1421, XP011095154 ISSN: 1041-4347 * Seite 1400 - Seite 1402 * ----- | 1-19 | |
| X | JAMPANI, R., PUDI, V.: "Using Prefix-Trees for Efficiently Computing Set Joins" DATABASE SYSTEMS FOR ADVANCED APPLICATIONS - LECTURE NOTES IN COMPUTER SCIENCE, 4. Mai 2005 (2005-05-04), Seiten 761-772, XP002483203 Heidelberg, Germany * Seite 763 - Seite 764 * ----- -/-- | 1-19 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 6. Juni 2008 | San-Bento Furtado, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 08 10 0719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | YAZDANI N ET AL: "Prefix trees: new efficient data structures for matching strings of different lengths" DATABASE ENGINEERING & APPLICATIONS, 2001 INTERNATIONAL SYMPOSIUM ON. JUL. 16-18, 2001, PISCATAWAY, NJ, USA,IEEE, 16. Juli 2001 (2001-07-16), Seiten 76-85, XP010554369 ISBN: 978-0-7695-1140-5 * Seite 76 - Seite 77 * ----- | 1-19 | |
| A | DESAI B C: "PERFORMANCE OF A COMPOSITE ATTRIBUTE AND JOIN INDEX" IEEE TRANSACTIONS ON SOFTWARE ENGINEERING, IEEE SERVICE CENTER, LOS ALAMITOS, CA, US, Bd. 15, Nr. 2, 1. Februar 1989 (1989-02-01), Seiten 142-152, XP000039043 ISSN: 0098-5589 * Seite 142 * ----- | 1-19 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 6. Juni 2008 | San-Bento Furtado, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)